# EUROPEAN PATENT SPECIFICATION

(11) **EP 4 375 205 B1**
(45) Date of publication and mention of the grant of the patent: **21.01.2026**
(21) Application number: 22844979.9
(22) Date of filing: 25.05.2022
(51) Int. Cl.: B65D 1/04, B65D 85/72, A47J 43/27, B65D 23/04, B65D 23/14, B65D 25/56

(54) **LIQUOR CONTAINER CONVENIENT FOR ACCURATE LIQUOR MIXING AND METHOD CONVENIENT FOR ACCURATE LIQUOR MIXING**
FLÜSSIGKEITSBEHÄLTER ZUM GENAUEN MISCHEN VON FLÜSSIGKEITEN UND VERFAHREN ZUM BEQUEMEN MISCHEN VON FLÜSSIGKEITEN
RÉCIPIENT DE BOISSON SPIRITUEUSE PRATIQUE POUR LE MÉLANGE PRÉCIS DE BOISSON SPIRITUEUSE ET PROCÉDÉ PRATIQUE POUR LE MÉLANGE PRÉCIS DE BOISSON SPIRITUEUSE

(30) Priority: 20.07.2021 CN 202110817665
(43) Date of publication of application: 29.05.2024
(73) Proprietor: Zhejiang Geely Holding Group Co., Ltd., Hangzhou City, Zhejiang 310051 (CN)
(72) Inventor: LI, Shufu, Hangzhou, Zhejiang 310051 (CN)
(74) Representative: Zaboliene, Reda
(86) International application number: PCT/CN2022/094960
(87) International publication number: WO 2023/000812

(56) References cited:
- CN-A- 113 697 229
- CN-U- 205 169 352
- CN-U- 205 169 352
- CN-U- 206 502 149
- CN-U- 216 186 743
- CN-Y- 2 663 310
- KR-A- 20040 007 361
- KR-A- 20110 044 461
- KR-A- 20140 133 145

## Description

### TECHNICAL FIELD

The present application relates to the technical field of wine sets, and in particular to a liquor container convenient for accurate liquor mixing and a method convenient for accurate liquor mixing.

### BACKGROUND

With continuous development of society, people's life quality has been greatly improved. In festivals and activities such as various gatherings, the use rate of alcohol becomes higher and higher, and people are constantly pursuing high-quality and flavorful raw liquor, which is becoming more and more popular.

In the prior art, in order to purchase flavorful raw liquor or liquor suitable for drinkers, it is necessary to purchase a large amount of raw liquor from different wine cellars for tasting, which increases time cost and purchase cost, and also causes waste when encountering raw liquor with poor flavor.

Based on the shortcomings existing in the prior art, it is urgently required to research a liquor container convenient for accurate liquor mixing and a method convenient for accurate liquor mixing to solve the above problems. KR 2004 0007361 A discloses a liquor container comprising a liquor bottle, a liquor mixing rod, an inner cap provided with a mounting hole and a liquor entrance-exit, and a second outer cap arranged above the inner cap and connected with the bottle mouth.

### SUMMARY OF THE DISCLOSURE

According to embodiments of the present application, the present application provides a liquor container for liquor mixing comprising: a liquor bottle; configured to package liquor with a specified height; a liquor mixing rod having a specified depth immersed in the liquor and configured to increase liquor mixing space by reducing the immersion depth of the liquor mixing rod; wherein the liquor mixing rod is provided with a first liquor mixing graduation; an inner cap arranged at a bottle mouth of the liquor bottle, wherein the inner cap is provided with a mounting hole, the liquor mixing rod is vertically fixed in the mounting hole, an upper end of the liquor mixing rod extends out of the inner cap, a lower end of the liquor mixing rod passes through the inner cap and is inserted and immersed in the liquor; the inner cap is further provided with a liquor entrance-exit configured to add liquor mixing liquid or pour the liquor; a first outer cap arranged at the liquor entrance-exit; and a second outer cap arranged above the inner cap and connected with either the first outer cap or the bottle mouth.

Furthermore, the mounting hole is connected by thread or snap-fit with the liquor mixing rod.

Furthermore, an outer side wall of the liquor bottle is provided with a second liquor mixing graduation.

Furthermore, an outer side wall of the liquor bottle is provided with a liquor level packaging graduation.

Furthermore, an outer side wall of the liquor bottle is provided with a liquor mixing rod depth graduation.

Furthermore, the liquor container for liquor mixing further comprises a detachable rotation wheel arranged at a top of the liquor mixing rod, the rotation wheel is detachably connected to the liquor mixing rod through an inner hexagonal connection pin.

Furthermore, the liquor mixing rod is further provided therein with a hollow cavity, and the liquor container for liquor mixing further comprises an information article or a decoration article sealed in the hollow cavity.

Another aspect of the present application protects a method for liquor mixing, the method is applied to the aforementioned liquor container for liquor mixing, and comprises: S1, mounting a liquor mixing rod in a liquor bottle; S2, pouring liquor into the liquor bottle, packaging, and sealing; S3, opening a second outer cap of the liquor bottle; S4, pulling and fixing the liquor mixing rod by a certain height, such that a level position of the liquor is lower than a liquor level packaging graduation; S5, opening the first outer cap, and adding liquor mixing liquid until the level position of the liquor flushes with the liquor level packaging graduation; S6, shaking the liquor well, and pouring out liquor with a specified volume through a liquor entrance-exit to taste; S7, returning S4, until the liquor mixing rod is unable to adjust a height of the liquor, ending.

Details of one or more embodiments of the present application are presented in the following drawings and description. Other features, purposes, and advantages of the present application will become apparent from the specification, drawings, and claims.

### BRIEF DESCRIPTION OF THE DRAWINGS

In order to explain technical solutions of the present application more clearly, drawings required to be used in description of the embodiments or of the prior art will be briefly introduced below. It is obvious that the drawings in the following description are only some embodiments of the present application. For one of ordinary skill in the art, other drawings can be further obtained according to these drawings on the premise of paying no creative work.
FIG. 1 is a structural view of a liquor container for liquor mixing according to this embodiment.
FIG. 2 is a flow chart of a method for liquor mixing according to this embodiment.

11-liquor bottle; 12-liquor mixing rod; 13-inner cap; 14-second outer cap; 15-rotation wheel.

### DETAILED DESCRIPTION

The technical solutions in the embodiments of the present application will be described clearly and completely below in combination with the drawings in the embodiments of the present application. Obviously, the described embodiments are merely some embodiments of the present application, rather than all embodiments.

It needs to be noted that the terms "first", "second", and the like in the specification, the claims, and the aforementioned drawings of the present application are used to distinguish similar objects, and need not be used to describe a specific sequence or order. It should be understood that data used in this way can be interchanged in appropriate cases, so that the embodiments of the present application described herein can be implemented in order other than those illustrated or described herein. In addition, the terms "include", "have", as well as any variations thereof, are intended to cover non-exclusive inclusion. For example, a process, method, system, product, or device that includes a series of steps or units need not be limited to those clearly listed steps or units, but may include other steps or units that are not clearly listed or inherent to these processes, methods, products, or devices.

The prior art has the following shortcoming: in the prior art, in order to purchase flavorful raw liquor or liquor suitable for drinkers, it is necessary to purchase a large amount of raw liquor from different wine cellars for tasting, which increases time cost and purchase cost, and also causes waste when encountering raw liquor with poor flavor.

Aiming at the defect of the prior art, in the present application, by arranging a liquor mixing rod in a liquor bottle and immersing the liquor mixing rod in liquor in the liquor bottle, drinkers are enabled to increase liquor mixing space by reducing an immersed depth of the liquor mixing rod; the drinkers can add different liquor by continuously adjusting the depth of the liquor mixing rod and thus accurately blend out liquor with different flavors, such that the drinkers can quickly find liquor suitable for their own tastes and avoid waste of liquor.

### Embodiment 1

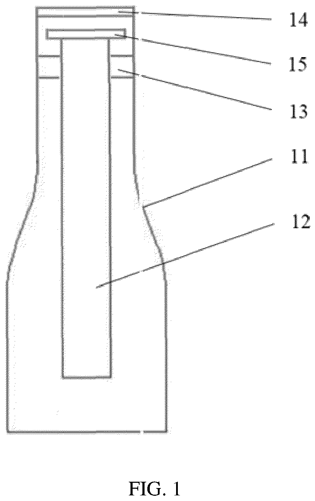

Referring to FIG. 1, this embodiment provides a liquor container convenient for accurate liquor mixing, which includes a liquor bottle 11; in use, liquor with a specified height is packaged in the liquor bottle 11; a liquor mixing rod 12 having a specified depth is immersed in the liquor and configured to increase liquor mixing space by reducing the immersion depth of the liquor mixing rod 12; the liquor mixing rod 12 is provided with a first liquor mixing graduation; a bottle mouth of the liquor bottle 11 is provided with an inner cap 13, the inner cap 13 is provided with a mounting hole, the liquor mixing rod 12 is vertically fixed in the mounting hole, an upper end of the liquor mixing rod 12 extends out of the inner cap 13, a lower end of the liquor mixing rod 12 passes through the inner cap 13 and is inserted and immersed in the liquor; the inner cap 13 is further provided with a liquor entrance-exit configured to add liquor mixing liquid or pour the liquor; the liquor entrance-exit is provided with a first outer cap; a second outer cap 14 is further provided above the inner cap 13, the second outer cap 14 is connected with the first outer cap or connected with the bottle mouth.

It needs to be explained that in this embodiment, by arranging the liquor mixing rod 12 in the liquor bottle 11 and immersing the liquor mixing rod 12 in the liquor in the liquor bottle, drinkers are enabled to increase liquor mixing space by reducing an immersed depth of the liquor mixing rod 12; the drinkers can add different liquor by continuously adjusting the depth of the liquor mixing rod 12 and thus accurately blend out liquor with different flavors, such that the drinkers can quickly find liquor suitable for their own tastes and avoid waste of liquor.

It needs to be further explained that in this embodiment, the liquor bottle 11 can not only hold liquor but also be used for liquor mixing, so that it is reused as a daily item in daily life, thereby saving resources to a certain extent.

Specifically, the first liquor mixing graduation is used to display a volume of the liquor in the liquor bottle 11, such that a volume of liquor mixing liquid can be intuitively seen during liquor mixing, it is convenient to control a proportion of added liquid and thereby blend out liquor suitable for one's own taste.

The bottle mouth of the liquor bottle 11 is provided with the inner cap 13, the inner cap 13 is provided with the mounting hole, the liquor mixing rod 12 is vertically fixed in the mounting hole, the upper end of the liquor mixing rod 12 extends out of the inner cap 13, and the lower end of the liquor mixing rod 12 passes through the inner cap 13 and is inserted and immersed in the liquor.

Specifically, the mounting hole is equipped with internal thread, and the liquor mixing rod 12 is equipped with external thread that matches the internal thread. The liquor mixing rod 12 is connected by thread in the mounting hole, such that the height of the liquor mixing rod 12 immersed in the liquor can be adjusted arbitrarily and liquor mixing space is added arbitrarily.

In some possible embodiments, the inner cap 13 is connected by thread to the bottle mouth of the liquor bottle 11.

In other possible embodiments, the inner cap 13 is tightly matched with the bottle mouth of the liquor bottle 11, and the inner cap 13 is directly inserted in the bottle mouth of the liquor bottle 11.

The inner cap 13 is further provided with a liquor entrance-exit configured to add liquor mixing liquid or pour the liquor.

In some possible embodiments, the liquor entrance-exit is arranged along an axial direction of the liquor mixing rod 12, the liquor in the liquor bottle 11 can be poured out from the liquor entrance-exit, and liquor can also be added from the liquor entrance-exit.

The liquor entrance-exit is provided with the first outer cap.

Specifically, the first outer cap is arranged at the liquor entrance-exit and used to seal the liquor entrance-exit, the first outer cap is connected by thread or snap-fitted to the liquor entrance-exit.

In some possible embodiments, the liquor entrance-exit is a through hole arranged in the inner cap 13, an axial direction of the through hole is consistent with a height direction of the inner cap 13.

The second outer cap 14 is further provided above the inner cap 13, the second outer cap 14 is connected with the first outer cap or connected with the bottle mouth.

In some possible embodiments, the second outer cap 14 is connected to the first outer cap, so that the first outer cap and the second outer cap 14 can rotate synchronously; that is, when the second outer cap 14 is rotated, the first outer cap can be rotated simultaneously; and when the second outer cap 14 drops from the bottle mouth of the liquor bottle 11, the first outer cap also drops from the liquor entrance-exit.

In other possible embodiments, the second outer cap 14 is connected to the first outer cap, so that the first outer cap and the second outer cap 14 can rotate synchronously; that is, when the second outer cap 14 is rotated, the first outer cap is rotated synchronously, and the second outer cap 14 is not connected by thread with the liquor bottle 11.

In other possible embodiments, the second outer cap 14 is only connected by thread with the bottle mouth of the liquor bottle 11.

In some possible embodiments, the mounting hole is connected by thread or snap-fitted with the liquor mixing rod 12.

Specifically, the liquor mixing rod 12 is directly snap-fitted to the mounting hole.

In some possible embodiments, an outer side wall of the liquor bottle 11 is provided with a second liquor mixing graduation.

In some possible embodiments, the outer side wall of the liquor bottle 11 is provided with a liquor level packaging graduation.

Specifically, the liquor level packaging graduation is used to display an original volume of the liquor when being packaged.

In some possible embodiments, the outer side wall of the liquor bottle 11 is provided with a liquor mixing rod depth graduation.

Specifically, the depth graduation is used to display a currently corresponding depth of the liquor mixing rod 12.

In some possible embodiments, a top of the liquor mixing rod 12 is provided with a detachable rotation wheel 15, the rotation wheel 15 is detachably connected to the liquor mixing rod 12 through an inner hexagonal connection pin.

Specifically, a shape and a size of the rotation wheel 15 are set according to actual situations, as long as it is ensured that the rotation wheel 15 is detachably connected with the liquor mixing rod 12, which is not limited here.

In some possible embodiments, the liquor mixing rod 12 is further provided therein with a hollow cavity, the liquor container for liquor mixing further comprises an information article or a decoration article, the hollow cavity seals the information article or the decoration article therein.

In some possible embodiments, the liquor mixing rod 12 is made of glass, and the liquor mixing rod 12 is provided therein with the decoration article, which improve aesthetics of the liquor container; the information article is an article with an information identification, the information identification includes information of the liquor in the liquor bottle 11, the arrangement of the information article enables drinkers to intuitively know the information of the liquor in the liquor bottle 11.

In some possible embodiments, the outer side wall of the liquor bottle 11 is provided with an identification piece; the identification piece has at least a cellar number identification, a cellar alcohol content identification, a flavor identification, and cellar grade information corresponding to the liquor in the liquor bottle 11 thereon.

In some possible embodiments, the outer side wall of the liquor bottle 11 is further provided with a covering piece; the covering piece can be removed from the outer side wall of the liquor bottle 11, and the covering piece covers on the identification piece, such that the identification piece cannot be seen and a blind-box drinking manner is formed.

In some possible embodiments, the outer side wall of the liquor bottle 11 is provided with two identification pieces, wherein one identification piece is covered by the covering piece, the other identification piece is not covered by the covering piece, and the uncovered identification piece is provided with a digital identifier for scanning and identification by mobile terminals.

In some possible embodiments, the identification piece is adhered on the outer side wall of the liquor bottle 11, and the identification piece is a paper label.

In some possible embodiments, the covering piece is adhered on the identification piece; the covering piece covers the identification piece completely, the identification piece cannot be seen, such that drinkers do not know the flavor of the liquor, thereby forming a blind-box drinking manner and increasing fun of drinking; the covering piece is also a paper label.

Specifically, an adhesive force between the covering piece and the identification piece is less than an adhesive force between the identification piece and the liquor bottle, such that the covering piece can be torn off from the identification piece, while the identification piece is still adhered on the liquor bottle.

Specifically, the identification piece is provided with a digital identifier for scanning and identification by mobile terminals. The digital identifier is used for a mobile terminal to scan and thereby connect to a cloud server of a distillery or supplier, and upload cellar information corresponding to the liquor in the liquor bottle 11 to the cloud server of the distillery or supplier, such that the cloud server of the distillery or supplier sends electronic gifts, electronic currencies, or prize information corresponding to the cellar information to the mobile terminal.

### Embodiment 2

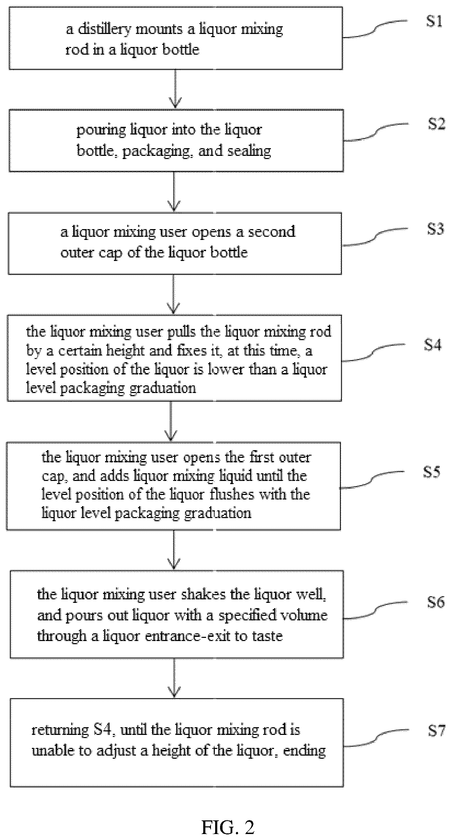

Another aspect of the present application provides a method convenient for accurate liquor mixing, the method is applied to the aforementioned liquor container convenient for accurate liquor mixing, as shown in FIG. 2, the method comprises: S1, a distillery mounts a liquor mixing rod 12 in a liquor bottle 11; S2, pouring liquor into the liquor bottle 11, packaging, and sealing; S3, a liquor mixing user opens a second outer cap 14 of the liquor bottle; S4, the liquor mixing user pulls the liquor mixing rod 12 by a certain height and fixes it, at this time, a level position of the liquor is lower than a liquor level packaging graduation; S5, the liquor mixing user opens the first outer cap, and adds liquor mixing liquid until the level position of the liquor flushes with the liquor level packaging graduation; S6, the liquor mixing user shakes the liquor well, and pours out liquor with a specified volume through a liquor entrance-exit to taste; S7, returning S4, until the liquor mixing rod 12 is unable to adjust a height of the liquor, ending.

Although the present application has been described through preferred embodiments, the present application is not limited to the embodiments described herein and further includes various changes and variations made without departing from the scope of the present application as defined in the appended claims.

In this specification, the involved positional terms, such as "front", "back", "up", "down", and the like are defined according to positions of components located in the figures and among the components in the accompany drawings, and are only for clarity and convenience of expressing technical solutions. It should be understood that the use of the positional terms should not limit the scope of protection requested in the present application.

## Claims

1. A liquor container for liquor mixing, comprising: a liquor bottle (11) configured to package liquor with a specified height; a liquor mixing rod (12) having a specified depth immersed in the liquor and configured to increase liquor mixing space by reducing the immersion depth of the liquor mixing rod (12); wherein the liquor mixing rod (12) is provided with a first liquor mixing graduation; an inner cap (13) arranged at a bottle mouth of the liquor bottle (11), wherein the inner cap (13) is provided with a mounting hole, the liquor mixing rod (12) is vertically fixed in the mounting hole, an upper end of the liquor mixing rod (12) extends out of the inner cap (13), a lower end of the liquor mixing rod (12) passes through the inner cap (13) and is inserted and immersed in the liquor; the inner cap (13) is further provided with a liquor entrance-exit configured to add liquor mixing liquid or pour the liquor; a first outer cap arranged at the liquor entrance-exit; and a second outer cap (14) arranged above the inner cap (13) and connected with either the first outer cap or the bottle mouth.

2. The liquor container for liquor mixing according to claim 1, wherein the mounting hole is connected by thread or snap-fit with the liquor mixing rod (12).

3. The liquor container for liquor mixing according to claim 1 or 2, wherein an outer side wall of the liquor bottle (11) is provided with a second liquor mixing graduation.

4. The liquor container for liquor mixing according to any one of claims 1-3, wherein an outer side wall of the liquor bottle (11) is provided with a liquor level packaging graduation.

5. The liquor container for liquor mixing according to any one of claims 1-4, wherein an outer side wall of the liquor bottle (11) is provided with a liquor mixing rod depth graduation.

6. The liquor container for liquor mixing according to any one of claims 1-5, further comprising a detachable rotation wheel (15) arranged at a top of the liquor mixing rod (12), wherein the rotation wheel (15) is detachably connected to the liquor mixing rod (12) through an inner hexagonal connection pin.

7. The liquor container for liquor mixing according to any one of claims 1-6, wherein the liquor mixing rod (12) is further provided therein with a hollow cavity, and the liquor container for liquor mixing further comprises an information article or a decoration article sealed in the hollow cavity.

8. A method for liquor mixing, wherein the method is applied to the liquor container for liquor mixing according to any one of claims 1-7, and comprises: S1, mounting a liquor mixing rod (12) in a liquor bottle (11); S2, pouring liquor into the liquor bottle (11), packaging, and sealing; S3, opening a second outer cap (14) of the liquor bottle (11); S4, pulling and fixing the liquor mixing rod (12) by a certain height, such that a level position of the liquor is lower than a liquor level packaging graduation; S5, opening the first outer cap (14), and adding liquor mixing liquid until the level position of the liquor flushes with the liquor level packaging graduation; S6, shaking the liquor well, and pouring out liquor with a specified volume through a liquor entrance-exit to taste; S7, returning S4, until the liquor mixing rod (12) is unable to adjust a height of the liquor, ending.

## Patentansprüche

1. Spirituosenbehälter zur Spirituosenmischung, der Folgendes umfasst: eine Spirituosenflasche (11), die zum Verpacken von Spirituosen mit einer bestimmten Höhe eingerichtet ist; einen Spirituosenmischstab (12) mit einer vorgegebenen Eintauchtiefe in die Spirituosen, der dazu eingerichtet ist, einen Spirituosenmischraum durch Verringerung der Eintauchtiefe des Spirituosenmischstabs (12) zu vergrößern, wobei der Spirituosenmischstab (12) mit einer ersten Spirituosenmischskala versehen ist; einen Innenverschluss (13), der an einer Flaschenmündung der Spirituosenflasche (11) angeordnet ist, wobei der Innenverschluss (13) mit einer Montageöffnung versehen ist, wobei der Spirituosenmischstab (12) vertikal in der Montageöffnung fixiert ist, wobei sich ein oberes Ende des Spirituosenmischstabs (12) aus dem Innenverschluss (13) erstreckt, wobei ein unteres Ende des Spirituosenmischstabs (12) den Innenverschluss (13) durchdringt und in die Spirituosen eingesetzt und eingetaucht ist, wobei der Innenverschluss (13) ferner mit einem Spirituosenein-/auslass versehen ist, der zum Hinzufügen von Spirituosenmischflüssigkeit oder zum Ausgießen der Spirituosen eingerichtet ist; einen ersten Außenverschluss, der am Spirituosenein-/auslass angeordnet ist; und einen zweiten Außenverschluss (14), der oberhalb des Innenverschlusses (13) angeordnet und entweder mit dem ersten Außenverschluss oder mit der Flaschenmündung verbunden ist.

2. Spirituosenbehälter zur Spirituosenmischung nach Anspruch 1, wobei die Montageöffnung mittels Gewinde oder Schnappverbindung mit dem Spirituosenmischstab (12) verbunden ist.

3. Spirituosenbehälter zur Spirituosenmischung nach Anspruch 1 oder 2, wobei eine Außenwand der Spirituosenflasche (11) mit einer zweiten Spirituosenmischskala versehen ist.

4. Spirituosenbehälter zur Spirituosenmischung nach einem der Ansprüche 1 bis 3, wobei die Außenwand der Spirituosenflasche (11) mit einer Füllstandsskala zur Verpackung der Spirituosen versehen ist.

5. Spirituosenbehälter zur Spirituosenmischung nach einem der Ansprüche 1 bis 4, wobei die Außenwand der Spirituosenflasche (11) mit einer Tiefenskala für den Spirituosenmischstab versehen ist.

6. Spirituosenbehälter zur Spirituosenmischung nach einem der Ansprüche 1 bis 5, der ferner ein abnehmbares Drehrad (15) umfasst, das an einer Oberseite des Spirituosenmischstabs (12) angeordnet ist, wobei das Drehrad (15) über einen inneren Sechskant-Verbindungsstift lösbar mit dem Spirituosenmischstab (12) verbunden ist.

7. Spirituosenbehälter zur Spirituosenmischung nach einem der Ansprüche 1 bis 6, wobei der Spirituosenmischstab (12) ferner mit einer Hohlkammer hierin versehen ist, wobei der Spirituosenbehälter zur Spirituosenmischung ferner einen Informationsgegenstand oder einen Dekorationsgegenstand umfasst, der in der Hohlkammer versiegelt ist.

8. Verfahren zur Spirituosenmischung, wobei das Verfahren auf den Spirituosenbehälter zur Spirituosenmischung nach einem der Ansprüche 1 bis 7 angewendet wird und Folgendes umfasst: S1, Einbauen eines Spirituosenmischstabs (12) in eine Spirituosenflasche (11); S2, Einfüllen der Spirituosen in die Spirituosenflasche (11), Verpacken und Versiegeln; S3, Öffnen eines zweiten Außenverschlusses (14) der Spirituosenflasche (11); S4, Herausziehen und Fixieren des Spirituosenmischstabs (12) auf eine bestimmte Höhe, sodass ein Füllstand der Spirituosen unterhalb einer Füllstandsskala zur Verpackung der Spirituosen liegt; S5, Öffnen des ersten Außenverschlusses (14) und Hinzufügen von Spirituosenmischflüssigkeit, bis der Füllstand der Spirituosen mit der Füllstandsskala zur Verpackung der Spirituosen bündig ist; S6, Durchmischen der Spirituosen und Ausgießen der Spirituosen mit einem spezifizierten Volumen über einen Spirituosenein-/auslass zum Verkosten; S7, Rückkehren zu S4, bis der Spirituosenmischstab (12) eine Höhe der Spirituosen nicht mehr anpassen kann, Ende.

## Revendications

1. Récipient d'alcool pour le mélange d'alcool, comprenant : une bouteille d'alcool (11) conçue pour contenir de l'alcool d'une hauteur spécifiée ; une tige de mélange d'alcool (12) ayant une profondeur spécifiée immergée dans l'alcool et conçue pour augmenter un espace de mélange d'alcool en réduisant la profondeur d'immersion de la tige de mélange d'alcool (12) ; dans lequel la tige de mélange d'alcool (12) est pourvue d'un première graduation de mélange d'alcool ; un bouchon interne (13) disposé au niveau d'une bouche de bouteille de la bouteille d'alcool (11), dans lequel le bouchon interne (13) est pourvu d'un trou de montage, la tige de mélange d'alcool (12) est fixée verticalement dans le trou de montage, une extrémité supérieure de la tige de mélange d'alcool (12) s'étend hors du bouchon interne (13), une extrémité inférieure de la tige de mélange d'alcool (12) passe à travers le bouchon interne (13) et est insérée et immergée dans l'alcool ; le bouchon interne (13) est en outre pourvu d'une entrée-sortie d'alcool conçue pour ajouter un liquide de mélange d'alcool ou verser l'alcool ; un premier bouchon externe disposé au niveau de l'entrée-sortie d'alcool ; et un second bouchon externe (14) disposé au-dessus du bouchon interne (13) et relié soit au premier bouchon externe, soit à la bouche de bouteille.

2. Récipient d'alcool pour le mélange d'alcool selon la revendication 1, dans lequel le trou de montage est relié par filetage ou par encliquetage à la tige de mélange d'alcool (12).

3. Récipient d'alcool pour le mélange d'alcool selon la revendication 1 ou 2, dans lequel une paroi latérale externe de la bouteille d'alcool (11) est pourvue d'une seconde graduation de mélange d'alcool.

4. Récipient d'alcool pour le mélange d'alcool selon l'une quelconque des revendications 1 à 3, dans lequel une paroi latérale externe de la bouteille d'alcool (11) est pourvue d'une graduation de conditionnement de niveau d'alcool.

5. Récipient d'alcool pour le mélange d'alcool selon l'une quelconque des revendications 1 à 4, dans lequel une paroi latérale externe de la bouteille d'alcool (11) est pourvue d'une graduation de profondeur de la tige de mélange d'alcool.

6. Récipient d'alcool pour le mélange d'alcool selon l'une quelconque des revendications 1 à 5, comprenant en outre une roue de rotation (15) amovible disposée au niveau d'une partie supérieure de la tige de mélange d'alcool (12), dans lequel la roue de rotation (15) est reliée de manière amovible à la tige de mélange d'alcool (12) par une goupille de liaison hexagonale interne.

7. Récipient d'alcool pour le mélange d'alcool selon l'une quelconque des revendications 1 à 6, dans lequel la tige de mélange d'alcool (12) est en outre pourvue d'une cavité creuse à l'intérieur de celle-ci, et le récipient d'alcool pour le mélange d'alcool comprend en outre un article d'information ou un article de décoration scellé dans la cavité creuse.

8. Procédé de mélange d'alcool, dans lequel le procédé est appliqué au récipient d'alcool pour le mélange d'alcool selon l'une quelconque des revendications 1 à 7, et comprend : S1 : monter une tige de mélange d'alcool (12) dans une bouteille d'alcool (11) ; S2 : verser de l'alcool dans la bouteille d'alcool (11), la conditionner et la sceller ; S3 : ouvrir un second bouchon externe (14) de la bouteille d'alcool (11) ; S4 : tirer et fixer la tige de mélange d'alcool (12) à une certaine hauteur, de sorte qu'une position de niveau de l'alcool soit inférieure à une graduation de conditionnement de niveau d'alcool ; S5 : ouvrir le premier bouchon externe (14) et ajouter un liquide de mélange d'alcool jusqu'à ce que la position de niveau de l'alcool soit au même niveau que la graduation de conditionnement de niveau d'alcool ; S6 : bien agiter l'alcool, et verser un volume spécifié d'alcool à travers une entrée-sortie d'alcool pour la déguster ; ; S7 : revenir à l'étape S4, jusqu'à ce que la tige de mélange d'alcool (12) ne puisse plus ajuster la hauteur d'alcool, fin.
